# EUROPEAN PATENT APPLICATION

(11) **EP 2 743 961 A1**
(43) Date of publication of application: **18.06.2014**
(21) Application number: 13193184.2
(22) Date of filing: 15.11.2013
(51) Int. Cl.: H01H 85/02, H01H 85/44, H01T 1/14, H01T 4/02, H01T 4/08, H01R 24/48

(54) **High voltage protection module**

(30) Priority: 17.12.2012 US 201213716932
(71) Applicant: Keithley Instruments, Inc., Cleveland OH 44139 (US)
(72) Inventor: Gibbons, John, Macedonia, OH 44056-1648 (US)
(74) Representative: Clarke, Jeffrey

(57) **Abstract**

A high voltage protection module can include a housing having two chambers (120,122) and a wall (114) separating the chambers (120,122). The wall (114) can have a hole (115) through which a conductive element (105) can pass to electrically couple an input (104) with an output (110). The conductive element (105) can be configured to break or fuse with the hole (115) responsive to a high voltage event at the input (104).

## Description

### Background

There have been numerous approaches over the years for incorporating a serial or parallel device into a semi-rigid high frequency transmission cable system. However, such systems have traditionally had a number of shortcomings associated therewith.

United States Patent No. 1,843,583 describes metal arc boxes for expulsion-type fuses. Such boxes, however, simply contain the explosion of an expulsion fuse when it vents upon blowing the fusible link inside the fuse and does not control the voltage at which the fuse blows or even alter the characteristics of when the fuse blows. These boxes are basically electrical "fuse mufflers" for the generated plasma when a fuse blows.

United States Patent Application Publication No. 2009/0296303 describes an overvoltage protection plug that utilizes a gas discharge tube for the protection. This plug does not, however, isolate the circuitry to be protected once the gas tube fires.

United States Patent Application Publication No. 2012/0039010 describes a spark gap for protecting electronic circuits from excessive electrical surges. The device is essentially a printed circuit board (PCB) spark gap and, similar to the plug noted above, does not isolate the input from the protected circuitry. Also, there is no provision to stop a plasma arc once it has started and while power is still being fed into the circuitry.

Accordingly, a need remains for improved protection for electrical circuits and components from high voltage surges.

### Summary

Embodiments of the disclosed technology generally include systems and devices for protecting electronic and electrical circuitry and components from the potentially damaging effects of high-voltage events. Compared to conventional, connectorized standalone devices, techniques in accordance with the disclosed technology tend to be significantly more economical and compact. Also, interruptions to the transmission line characteristic impedance from modifying the cable system for element insertion may be compensated to an almost negligible level.

### Brief Description of the Drawings

FIGURE 1 illustrates a schematic view of a first embodiment of a high voltage protection system including a high voltage protection module in accordance with certain embodiments of the disclosed technology.

FIGURE 2 illustrates a top view of the high voltage protection module illustrated in FIGURE 1.

FIGURE 3 illustrates an orthogonal view of the high voltage protection module illustrated in FIGURES 1 and 2.

FIGURE 4 illustrates a schematic view of a second embodiment of a high voltage protection system including a high voltage protection module in accordance with certain embodiments of the disclosed technology.

FIGURE 5 illustrates an orthogonal view of the high voltage protection module illustrated in FIGURE 4.

FIGURE 6 illustrates a side view of a third embodiment of a high voltage protection system including a high voltage protection module in accordance with certain embodiments of the disclosed technology.

FIGURE 7 illustrates a top view of the high voltage protection module illustrated in FIGURE 6.

### Detailed Description

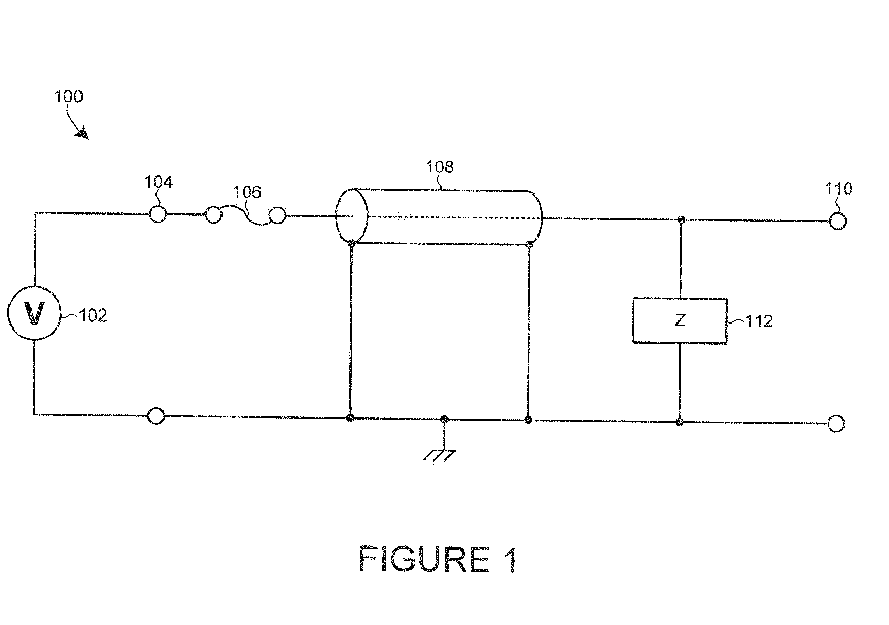

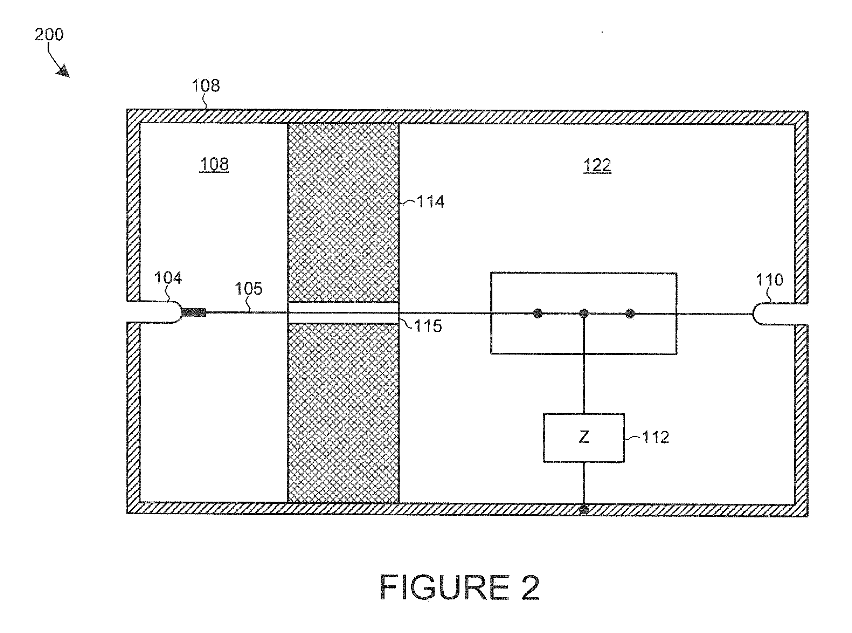

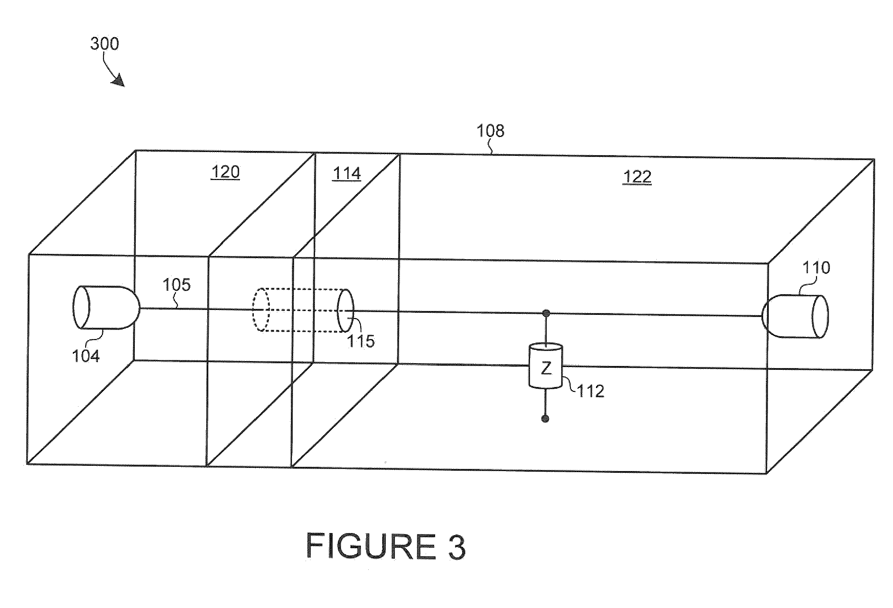

FIGURE 1 illustrates a schematic view 100 of a first embodiment of a high voltage protection system including a high voltage protection module 108 in accordance with certain embodiments of the disclosed technology. FIGURES 2 and 3 illustrate top and orthogonal views 200 and 300, respectively, of the high voltage protection module 108.

In the example, uncontrolled input voltage from a voltage source 102 enters the protection module 108 via an input jack 104, which is attached to a conductive element 105, e.g., a fine-diameter wire of suitable characteristics such as AWG #50 bare copper wire, and proceeds through a hole 115 in a metal plate 114 separating a first chamber 120 from a second chamber 122. The housing of the protection module 108 may be a metal enclosure that is tied to the chassis on the meter it is protecting, which may be tied to earth ground, for example.

The conductive element 105 passes through the hole 115 without touching the walls of the hole 115 and is at least substantially centered within the diameter of the hole 115. The diameter of the hole 115 generally controls the point at which the protection module 108 initiates protection by isolating the input jack 104 from the output jack 110. In general, the smaller the diameter of the hole 115, the lower the voltage that will initiate the protection.

The point at which the protection activates may be controlled by the distance between the conductive element 105 and the edge of the hole 115 in the metal plate 114. The current level allowed to flow through the protection module 108 may also be controlled by the diameter of the hole 115, fusing characteristics of the conductive element 105, or both. Further, activation of the protection module 108 may be easily verified by simple observation as to whether the conductive element 105 is still present between the first and second chambers 120 and 122.

When the input voltage at the input jack 104 is sufficiently high, the suspended conductive element 115 may arc to the walls of the hole 115 in the metal plate 114 separating the chambers 120 and 122, thus causing the conductive element 115 to melt and fuse to the metal plate 114, or break. This causes a short to ground and, thus, effectively disconnects the protected output jack 110 from the uncontrolled input jack 104.

If the high voltage is maintained at the input jack 104 indefinitely, the arcing may continue inside the first chamber 120 but will be electrically and mechanically isolated from the second chamber 122, the inside of which may advantageously maintain electrical connection to the meter's input jacks. This isolation thus protects the input circuitry, e.g., of virtually any piece of electrical or electromechanical equipment that may be exposed to high voltage input damage, from the high voltage overload that may still be present at the input jack 104 of the protection module 108.

In embodiments where the input protection is intended for a high voltage 'arcover' or 'flashover' event, an impedance 112 may be added in order to increase the surge current in the protection conductive element 105, thus enabling the conductive element 105 to melt and fuse with the metal plate 114 or break sooner. This may provide an even greater increase in protection for the input circuitry of the electrical device, e.g., meter. In certain embodiments, the impedance 112 may be more accurately tuned to short and cause the conductive element 105 to fuse at a much more precise voltage and thus allow the hole 115 in the separation plate 114 to be less accurately controlled and still meet the criteria for high voltage input protection. Devices used in impedance 112 may include "spark-gap gas discharge tubes" or other devices suitable for accomplishing this task to a much higher degree of voltage protection accuracy. Such embodiments may result in a significantly more accurate control of voltages entering the device and thus substantially increasing the protection of the piece of equipment being utilized by the protection module's protective characteristics.

It should be noted that the first chamber 120 generally does not need to be scaled in direct proportion to the maximum input voltage that the protection module 108 can handle. In embodiments where the protection is set to activate at 2,000 Volts, for example, the first chamber 120 may sustain the arcing even if the input voltage rises to 50,000 Volts because the arc plasma would have already established a preferred current path for its discharge current. The first chamber 120 should generally be robust enough, e.g., made of steel instead of aluminum, in order to handle the plasma energy. Also, while extreme voltage overloads on the external cable could arc to the outside of the protection module 108 itself, the module 108 would advantageously protect the input to the instrument as the current would still be safely directed to ground.

In certain embodiments, the output of an electrical instrument or device may be afforded the same type and/or level of protection as that provided to the input of the instrument or device. For example, the output of the device may be inserted into the protected side, e.g., second chamber 122, of the protection module 108, and the output may then be connected to the application through the input connections of the first chamber 120.

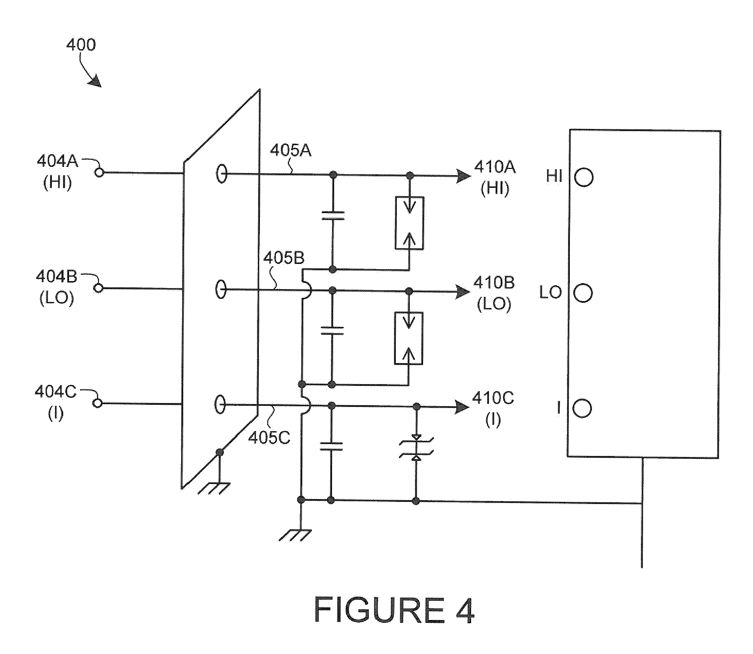

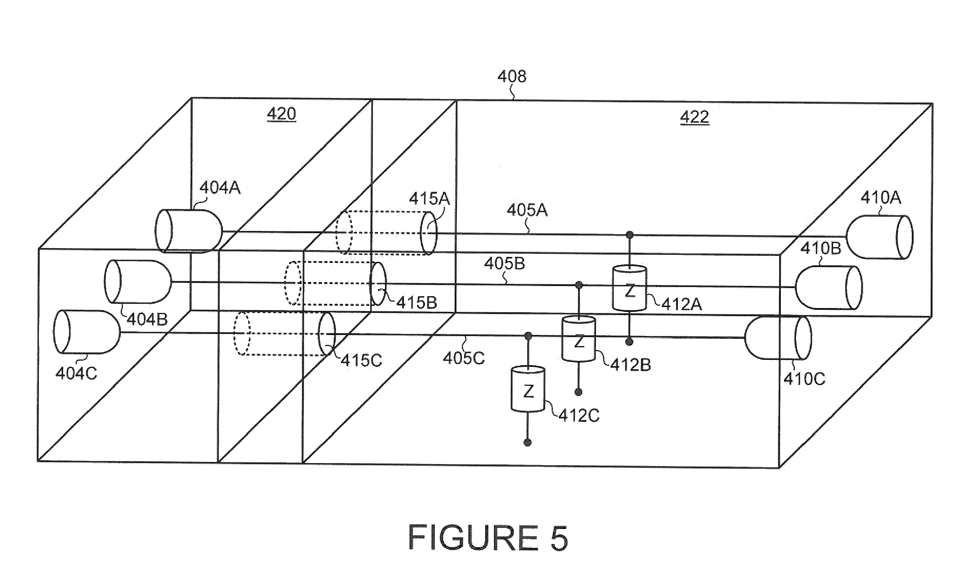

FIGURE 4 illustrates a schematic view 400 of a second embodiment of a high voltage protection system including a high voltage protection module 408 in accordance with certain embodiments of the disclosed technology. FIGURE 5 illustrates an orthogonal view 400 of the high voltage protection module 408 illustrated in FIGURE 4.

In the example, the protection module 408 consists of a metal, e.g., aluminum or steel, box having first and second internal compartments 420 and 422 that are separated by a metal plate 414. The metal plate 414 may include a vertically-mounted flash plate having multiple holes 415A, 415B, and 415C that are drilled therein and each have an appropriate diameter for the particular implementation, e.g., 1/16 inch.

The holes 415A, 415B, and 415C in the metal plate 414 may be configured to allow for incoming signals received at input jacks 404A, 404B, and 404C, respectively, to pass between the first and second compartments 420 and 422 on fusible conductive elements or wires 405A, 405B, and 405C, respectively, to output jacks 410A, 410B, and 410C, respectively. The wires 405A, 405B, and 405C generally pass straight through the holes 415A, 415B, and 415C, respectively, without making contact thereto unless a certain event, e.g., a high-voltage arc event at or through one or more of the input jacks 404A, 404B, and 404C, occurs, thus causing any or all of the conductive elements 405A, 405B, and 405C to melt and fuse with the holes 415A, 415B, and 415C, respectively, or simply break.

Any or all of the input jacks 404A, 404B, and 404C and output jacks 410A, 410B, and 410C may be banana jacks, banana plugs, or a combination thereof, and may be spaced a suitable distance, e.g., ¾ inch, apart from each other. The output jacks 410A, 410B, and 410C may be configured so as to plug directly into a meter such as a digital multi-meter, for example, or virtually any piece of electrical or electromechanical instrumentation that may benefit from or require suitable protection. Any or all of the input jacks 404A, 404B, and 404C and output jacks 410A, 410B, and 410C may be insulated from the box and able to withstand at least 1,000 Volts DC, for example, or virtually any voltage that is preferable or necessary to support the intended application.

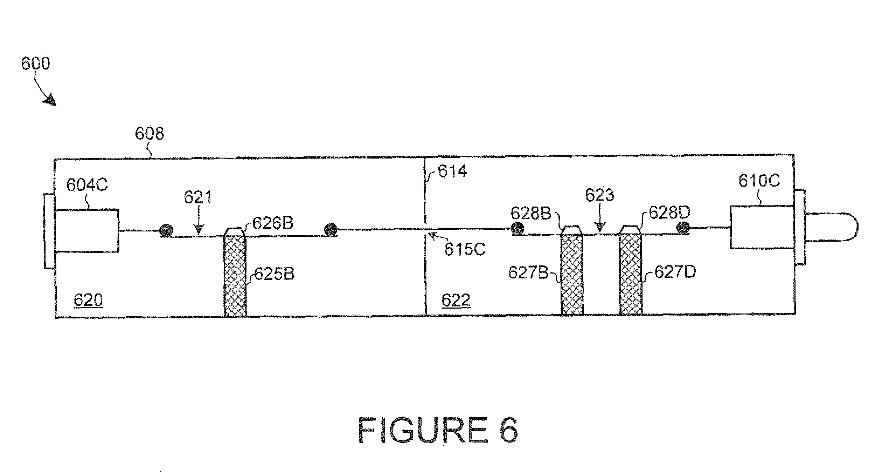

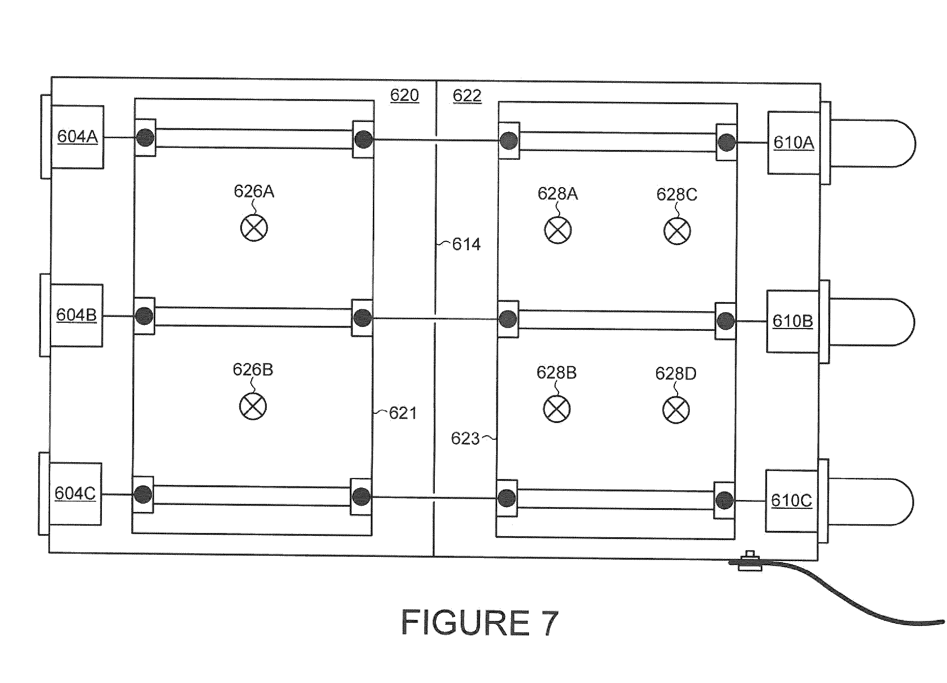

FIGURE 6 illustrates a side view 600 of a third embodiment of a high voltage protection system including a high voltage protection module 608 in accordance with certain embodiments of the disclosed technology. FIGURE 7 illustrates a top view 700 of the high voltage protection module 608 illustrated in FIGURE 6. The protection module 608 is similar to the protection module 408 illustrated by FIGURES 4 and 5 in that it includes a metal box having first and second compartments 620 and 622 separated by a metal plate 614 that has multiple holes 615A, 615B, and 615C, through which conductive elements 605A, 605B, and 605C may pass, thus providing electrical connection between each of multiple input jacks 604A, 604B, and 604C and output jacks 610A, 610B, and 610C, respectively.

The protection module 608 differs from the protection module 408 illustrated by FIGURES 4 and 5 in that it further includes a first printed circuit board (PCB) 621 mounted within the first compartment 620 and a second PCB 623 mounted within the second compartment 622. The first PCB 621 is positioned electrically between the input jacks 604A, 604B, and 604C and the holes 615A, 615B, and 615C, respectively, and the second PCB 623 is positioned electrically between the holes 615A, 615B, and 615C and the output jacks 610A, 610B, and 610C, respectively.

In certain embodiments, either or both of the PCBs 621 and 623 may include a two-layer board, the bottom layer being a solid ground plane, e.g., copper. A solder pad may be located by each of the holes 615A, 615B, and 615C in the flash plate 614 to allow the fuse wires 605A, 605B, and 605C to be aligned such that they pass through the holes 615A, 615B, and 615C, respectively, without touching the plate 614 itself. A number of other suitable techniques may be employed to hold the fusible element.

In the example, first mounting screws 626A and 626B are used to secure the first PCB 621 to first metal standoffs 625A and 625B, respectively, and second mounting screws 628A, 628B, 628C, and 628D are used to secure the second PCB 623 to second metal standoffs 627A, 627B, 627C, and 627D, respectively. The first metal standoffs 625A and 625B and second metal standoffs 627A, 627B, 627C, and 627D thus provide electrical connection between the first and second PCBs 621 and 623, respectively, to the bottom ground plane inside the protection module 608.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

Consequently, in view of the wide variety of permutations to the embodiments described herein, this detailed description and accompanying material is intended to be illustrative only, and should not be taken as limiting the scope of the invention. What is claimed as the invention, therefore, is all such modifications as may come within the scope and spirit of the following claims and equivalents thereto.

## Claims

1. A high voltage protection module, comprising:
a housing comprising a first chamber, a second chamber, and a wall separating the first and second chambers, the wall comprising a first hole therethrough;
a first input extending into the first chamber;
a first output extending from the second chamber; and
a first conductive element passing through the first hole and coupling the first input with the first output, wherein the first conductive element is configured to break or fuse with the wall at the first hole responsive to a high voltage event at the first input.

2. The high voltage protection module of claim 1, wherein the housing comprises an electrically conductive box.

3. The high voltage protection module of claim 1, wherein the wall comprises an electrically conductive plate.

4. The high voltage protection module of any preceding claim, wherein the first input comprises an input connection device.

5. The high voltage protection module of any preceding claim, wherein the first output comprises an output connection device.

6. The high voltage protection module of any preceding claim, further comprising:
a second hole through the wall;
a second input extending into the first chamber;
a second output extending from the second chamber; and
a second conductive element passing through the second hole and coupling the second input with the second output, wherein the second conductive element is configured to break or fuse with the wall at the second hole responsive to a high voltage event at the second input.

7. The high voltage protection module of claim 6, further comprising a first printed circuit board (PCB) positioned within the first chamber and configured to provide electrical connection between each of the first and second inputs and the first and second holes, respectively.

8. The high voltage protection module of claim 7, wherein the first PCB is mounted to a ground plane of the housing via metal standoffs.

9. The high voltage protection module of claim 7 or 8, further comprising a second PCB positioned within the second chamber and configured to provide electrical connection between each of the first and second holes and the first and second outputs, respectively.

10. The high voltage protection module of claim 9, wherein the first and second PCBs are mounted to a ground plane of the housing via multiple metal standoffs.

11. The high voltage protection module of any preceding claim, wherein the high voltage event comprises a voltage surge having a voltage level that is considered hazardous to the device being protected by the protection module.

12. The high voltage protection module of any preceding claim, wherein:
the first input is configured to receive a first input voltage from a first voltage source, and further wherein
the first output is configured to deliver the first input voltage to an electrical device to be protected.

13. The high voltage protection module of claim 12, wherein the electrical device comprises an electric meter.

14. The high voltage protection module of claim 13, wherein the electric meter comprises a digital multi-meter.

15. The high voltage protection module of any of claims 12 to 14, wherein the at least a first output provides direct connection to the electrical device.
